# EUROPEAN PATENT SPECIFICATION

(11) **EP 4 090 702 B1**
(45) Date of publication and mention of the grant of the patent: **13.03.2024**
(21) Application number: 21701077.6
(22) Date of filing: 15.01.2021
(51) Int. Cl.: C08K 3/30, C08K 3/38, C08K 5/00, C08K 5/098, C08K 5/42, C09D 167/08, C09D 5/02, C09D 7/61, C09D 7/63, C09F 9/00, C09D 7/40

(54) **WATER-IN-OIL COATING COMPOSITION**
WASSER-IN-ÖL-BESCHICHTUNGSZUSAMMENSETZUNG
COMPOSITION DE REVÊTEMENT EAU-DANS-L'HUILE

(30) Priority: 17.01.2020 EP 20152434
(43) Date of publication of application: 23.11.2022
(73) Proprietor: Akzo Nobel Coatings International B.V., 1077 WW Amsterdam (NL)
(72) Inventor: FLAPPER, Jitte, 1077 WW Amsterdam (NL); KLAASEN, Robert Paul, 1077 WW Amsterdam (NL)
(74) Representative: Akzo Nobel IP Department
(86) International application number: PCT/EP2021/050787
(87) International publication number: WO 2021/144410

(56) References cited:
- WO-A1-93/15153
- WO-A1-03/093384
- WO-A1-2010/054461
- CN-A- 108 285 725
- GB-A- 1 071 164

## Description

### Field of the Invention

The present invention relates to a water-in-oil coating composition comprising a water phase emulsified in a non-aqueous liquid phase, wherein the non-aqueous phase comprises an autoxidizable binder and to a substrate coated with a coating deposited from such water-in-oil coating composition.

### Background of the Invention

Autoxidizable resins are well-known in the coatings industry. Alkyd resins are an example of autoxidizable resins. Other examples of autoxidizable resins are polyacrylates modified with fatty acids or resins comprising unsaturated ether groups such as found in e.g. allyl ethers, cyclopentenyl ethers and vinyl dioxolanes, and polymers or copolymers of butadiene.

Alkyd resins are widely used in coating compositions such as paint. An alkyd resin is a fatty acid functionalized polyester resin that comprises unsaturated fatty acids, such as for example oleic acid, linoleic acid, or linolenic acid. Drying of paints comprising autoxidizable resins, comprises evaporation of the liquid carrier (organic solvent and/or water) and, subsequently, hardening of the resin via radical autoxidation reactions. The latter is known as chemical or oxidative drying. The fatty acid moieties of the alkyd resin react with oxygen from the atmosphere to form hydroperoxides which subsequently decompose to form free radicals. Recombination of these free radicals causes covalent bonds to be formed between the alkyd polymer chains, thus forming cross-links between polymer chains. In this way, a liquid coating composition that comprises alkyd resin hardens to form a solid cured coating. This process is also referred to as autoxidation or oxidative drying.

Alkyd paints typically form a hard, glossy surface that is easy to clean and resists scratching, water, and chemicals. They are primarily used for trim, doors, cabinets, furniture, floors and other high-use areas, and are popular with professional painters because they adhere well to most surfaces and "level out" to hide brush marks and small surface irregularities, and cure to a smooth surface that latex paints cannot match.

Alkyd paints often are solvent-based. Such solvent-based alkyd paints comprise an organic solvent in which the alkyd resin is dissolved. Such solvent-based paints typically comprise high levels of volatile organic compounds (VOC). Today, water is often added to solvent-based alkyd paints in order to reduce the VOC content. Such paints are often referred to as alkyd paints with water inclusion, alkyd/water inclusion paints, or water-in-oil paints. Typical alkyd/water inclusion paints contain 10-15 % of water in the liquid formulation. Water-in-oil alkyd paints with higher water contents do exist.

The time for alkyd paints to dry depends on the concentration and type of unsaturated oil or fatty acids used to prepare the resin. Autoxidation and crosslinking of the unsaturated fatty acid component can proceed unaided, but the time for drying is generally found to be unacceptably long for many practical purposes. The reactions are significantly accelerated by the presence of a metal-based drying catalyst, commonly referred to as a "drier" or "siccative". Whereas an alkyd coating may take months to dry in the absence of a drying catalyst, in the presence of such a catalyst, drying can be accomplished within a much shorter time.

Well-known driers include salts containing cobalt (Co), cerium (Ce), iron (Fe), manganese (Mn) and vanadium (V) as the cation; and halides, nitrates, sulphates, and carboxylates such as acetates, ethylhexanoates, octanoates, neodecanoates, and naphthenates, or acetoacetonates, as the anion. The catalytic activity of the polyvalent metal during decomposition of the (hydro)peroxide relies on the repeated transition of the metal ion from the lower to the higher oxidation state and back again, leading to reduction and oxidation of the hydroperoxides to catalyze and accelerate oxidation of the unsaturated oil component of the composition. For this reason, transition metals are commonly employed in such driers, since transition metals are capable of switching from a lower valence state to a higher valence state in a redox reaction with fatty acid peroxides present in the alkyd.

Three different types of driers have been identified (WO2012079624; Soucek et al Prog. Org Chem. 73, (2012) pp 435-454). Primary driers, also referred to as top driers, surface driers, or oxidation driers, promote the top-down hardening of a liquid alkyd resin. The mode of action of primary driers in the autoxidative curing process is deactivation of natural occurring anti-oxidants, oxygen uptake, peroxide formation and peroxide decomposition. Primary driers are characterized by having at least two accessible valence states which allows catalytic hydroperoxide decomposition and regeneration of the active species. Examples of primary driers are cobalt (Co), cerium (Ce), iron (Fe), manganese (Mn) and vanadium (V) salts. To enhance homogeneous through-drying of a coating film, primary driers are frequently used in combination with secondary and coordination driers.

Coordination driers, also referred to as through driers, promote the film-forming process by interaction with the carboxyl and hydroxyl groups in the polymeric binder. Thus, coordination driers can bridge two or more polymer chains. These carboxyl and hydroxyl groups may be initially present in the binder molecule or may be formed during the autoxidation process. Examples of coordination driers are metal driers based on zirconium (Zr), strontium (Sr), aluminum (Al), bismuth (Bi), lanthanum (La), neodymium (Nd), lead (Pb), and barium (Ba).

Secondary driers, also referred to as auxiliary driers, are metal driers that exist in a single oxidation state and are not catalytically active by themselves. Secondary driers affect the drying rate by interacting with primary driers. Secondary driers include calcium (Ca), zinc (Zn), potassium (K) and lithium (Li) metal soaps.

To improve appearance and quality of the resulting coating film and to accelerate drying, primary driers may be combined with coordination driers and/or secondary driers.

The most widely used primary driers are cobalt carboxylates because of their good drying performance at ambient temperature and coloristic properties. Primary driers based on non-cobalt metals, in particular primary driers comprising complexes of iron or manganese and nitrogen donor ligands, are also known.

A problem with water-in-oil alkyd coating compositions is 'retardation of aged drying': it takes longer for a coating layer to dry after prolonged storage of the paint. In other words, it takes longer for a coating layer to dry, if it is applied from a paint that has been stored for 10 weeks compared to a paint that has been stored for one week. This phenomenon is sometimes referred to as "loss of dry time stability". It is believed that the phenomenon is caused by deactivation of the primary drier in the presence of water.

In WO 2010/054461 is disclosed a stabilized drier for water-in-oil alkyd-based compositions. The stabilized drier comprises an inclusion complex of a cyclodextrin and a metal drier. A disadvantage of cyclodextrins is, however, that cyclodextrins may form inclusion complexes with a wide range of compounds in aqueous solution, such as biocides and corrosion inhibitors. Such inclusion complexes may render the compounds inactive.

Another problem with water-in-oil alkyd coating compositions is the surface appearance of the resulting coating. Typically, coatings deposited from water-in-oil alkyd coating compositions are less in gloss and show reflection haze, in particular if applied on a surface after prolonged storage of the coating composition.

The issues with respect to retardation of aged drying and surface appearance of the resulting coating as described above for water-in-oil alkyd coating compositions equally apply to water-in-oil coating compositions based on other autoxidizable resins.

There is a need for autoxidizable coating compositions, such as alkyd based coating compositions, which are formulated as water-in-oil compositions in order to have low VOC levels, which are stable and do not exhibit retardation of aged drying and have good coating properties such as surface appearance, gloss and hardness.

### Summary of the Invention

Surprisingly, it has now been found that if, in a water-in-oil coating composition with an autoxidizable binder, an inorganic first salt that is hardly soluble in the non-aqueous binder phase and an organic second salt of an alkali metal or of an alkaline earth metal are dissolved in the water phase, a stable water-in-oil coating composition is obtained that has good and stable drying properties and results in coatings with good surface appearance, also after storage. This allows paint manufacturers, paint shops and painters to store the water-in-oil paint for a longer period of time without loss of drying and coating properties.

Accordingly, the invention provides in a first aspect a water-in-oil coating composition comprising a water phase emulsified in a non-aqueous liquid phase, wherein the non-aqueous phase comprises an autoxidizable binder and wherein an inorganic first salt and an organic second salt are dissolved in the water phase, wherein the inorganic first salt has a solubility in water of at least 100 grams per liter as determined at 20 °C, and a solubility in the non-aqueous phase of less than 1 grams per liter as determined at 20 °C, and wherein the second salt is an organic salt of an alkali or alkaline earth metal, and wherein the coating composition comprises a primary drier.

An important advantage of the coating composition of the present invention is that it combines low VOC levels with the advantageous properties of autoxidizable coatings such as alkyd paints, such as good gloss and hardness, whilst reducing the issues of prolonged drying and lesser surface appearance after prolonged storage.

In a second aspect, the invention provides a substrate coated with a coating deposited from a coating composition according to the first aspect of the invention.

### Detailed Description of the Invention

The water-in-oil coating composition according to the invention comprises a water phase emulsified in a non-aqueous liquid phase. The non-aqueous phase comprises an autoxidizable binder. In the water phase, an inorganic first salt and an organic second salt of an alkali metal or an alkaline earth metal are dissolved.

The inorganic first salt has a solubility in water of at least 100 grams per litre as determined at 20 °C, preferably at least 300 grams per litre. The inorganic first salt has a solubility in the non-aqueous phase of less than 1.0 grams per litre, preferably less than 0.1 grams per litre, as determined at 20 °C.

The solubility in water is determined at 20 °C in demineralized water.

Preferably, the first salt has an inorganic anion with a valence of two or three, more preferably a valence of two. Suitable inorganic anions with a valence of three are for example borate and phosphate. Suitable inorganic anions with a valence of two are for example sulphate, hydrogen borate, and hydrogen phosphate.

In a preferred embodiment, the inorganic first salt is a sulphate salt. The sulphate salt preferably is sodium sulphate, potassium sulphate, ammonium sulphate, magnesium sulphate, or aluminium sulphate. Magnesium sulphate and ammonium sulphate are particularly preferred.

The water phase preferably comprises the inorganic first salt in an amount in the range of from 0.1 to 5.0 wt%, more preferably of from 0.2 to 3.0 wt%. Reference herein to the amount of the inorganic first salt is to the amount of the inorganic first salt in anhydrous form, i.e. any hydrate water in the salt as added to the composition is ignored.

The second salt dissolved in the water phase is an organic salt such as a carboxylate, sulphonate, phosponate, or phosphinate salt.

The alkali metal or alkaline earth metal of the organic second salt preferably is lithium, sodium, potassium, cesium, magnesium, calcium, strontium, or barium, more preferably lithium, sodium, potassium, cesium, or magnesium. A particularly preferred metal is sodium.

The organic second salt is dissolved in the water phase. The second salt preferably has a solubility in water of at least 100 grams per litre, more preferably at least 500 grams per litre, as determined at 20 °C. Preferably, the solubility of the organic second salt in the water phase is at least 10 times higher than its solubility in the non-aqueous phase, more preferably at least 100 times higher, even more preferably at least 500 times higher, still more preferably at least 1.000 times higher. Preferably, the organic second salt has a solubility in the water phase of at least 100 grams per litre and the solubility of the organic second salt in the water phase is at least 10 times higher than its solubility in the non-aqueous phase. The solubility of the organic second salt in the non-aqueous phase is preferably less than 100 grams per litre, more preferably less than 50 grams per litre, even more preferably less than 10 grams per litre, e.g. at most 5, 1, or 0.5 grams per litre, particularly preferred at most 0.1 grams per litre. Reference herein to solubility is to solubility determined at 20 °C.

The organic second salt preferably is a carboxylate salt with a carboxylate anion and an alkali or alkaline earth metal cation. The carboxylate anion may be a mono- or di-carboxylate anion, preferably a mono-carboxylate anion. The carboxylate anion may be an aliphatic or aromatic carboxylate anion, preferably an aliphatic carboxylate anion. The carboxylate anion may have one or more pendant polar groups to increase the solubility in water. Preferably, the carboxylate anion is a saturated, branched or straight-chain aliphatic, monocarboxylate anion.

The carboxylate anion may have 1 to 16 carbon atoms, more preferably 2 to 10 carbon atoms, even more preferably 2 to 8 carbon atoms. Even more preferably, the carboxylate anion is selected from the group consisting of acetate, propionate, and 2-ethyl-hexanoate. It will be appreciated that the maximum number of carbon atoms in the carboxylate anion for a water-soluble salt will depend on the metal cation and on the optional presence of pendant polar groups. If the metal cation is sodium, the carboxylate anion may have up to 8 or even 10 carbon atoms. If the metal cation is a metal cation other than sodium, the carboxylate anion may have up to 4 carbon atoms, preferably 2 or 3 carbon atoms.

Particularly preferred organic second salts are selected from the group consisting of sodium acetate, sodium propionate, and sodium 2-ethyl hexanoate, lithium acetate, potassium acetate, magnesium acetate, and mixtures of two or more thereof. Especially preferred organic second salts are selected from the group consisting of sodium acetate, sodium propionate, and sodium 2-ethyl hexanoate.

The coating composition preferably comprises at least 0.1 wt% of the organic second salt in the water phase, based on the weight of the water phase, preferably at least 0.5 wt%, more preferably at least 1.0 wt%. The upper limit is not especially critical. Preferably, the coating composition comprises at most 10 wt% of the organic second salt in the water phase, based on the weight of the water phase, more preferably at most 5 wt%. Based on the total weight of the coating composition, the coating composition preferably comprises at least 0.02 wt% of the organic second salt, more preferably at least 0.1 wt%, even more preferably at least 0.2 wt%. Reference herein to the amount of the organic second salt is to the amount of the organic second salt in anhydrous form, i.e. any hydrate water in the salt as added to the composition is ignored.

Preferably, the water-in-oil coating composition comprises less than 0.1 wt% of cyclodextrin based on the weight of autoxidizable binder, more preferably less than 0.05 wt% of cyclodextrin, even more preferably less than 0.001 wt% of cyclodextrin. The amount of cyclodextrin herein refers to the total amount of alpha, beta, and gamma cyclodextrins. In a particularly preferred embodiment, the coating composition is free of cyclodextrin.

The water-in-oil coating composition may comprise any suitable amount of water. Preferably, the water-in-oil coating composition comprises more than 5.0 wt% of water, more preferably more than 7.5 wt%, even more preferably more than 10 wt%, still more preferably more than 12.5 wt%. Water-in-oil coating compositions comprising at least 15 wt% water are particularly preferred.

The amount of water in a water-in-oil coating composition preferably does not exceed 49 wt% of the total composition since at such high levels the emulsion may become instable or inverse into an oil-in-water composition. Accordingly, the amount of water in the water-in-oil coating composition is preferably less than 49 wt%, More preferably the amount of water is less than 45 wt%, even more preferably less than 40 wt%, still more preferably less than 30 wt%, most preferably less than 25 wt%.

The water-in-oil coating composition comprises a primary drier. The primary drier may be any primary drier known in the art in any suitable amount. The primary drier may for example be a salt of cobalt, cerium, iron, manganese, and/or vanadium, a cobalt-free metal-ligand complex, or a polymeric cobalt drier. Preferably, the coating composition does not comprise cobalt and is thus free of a primary drier comprising cobalt. The coating composition may further comprise coordination driers and/or secondary driers. Besides driers, the coating composition may optionally comprise drying-accelerating complexing agents, for example, 2,2'-bipyridyl and 1,10-phenantroline. The complexing agents can be added in an amount of from 0 to 3 wt. %, preferably from 0.1 to 1.5 wt.%, based on the weight of the total resin.

The non-aqueous phase comprises an autoxidizable binder. Any suitable autoxidizable binder may be used. Preferably the autoxidizable binder is an alkyd resin. Reference herein to alkyd resins is to alkyds and to modified alkyds such as for example polyurethane modified alkyds, silicone modified alkyds, styrene modified alkyds, (meth)acrylic modified alkyds, vinylated alkyds, polyamide modified alkyds, or epoxy modified alkyds.

Any suitable alkyd resin may be used. Such alkyd resins are known in the art. Suitable autoxidizable alkyd resins for use in the invention, are in general the reaction product of the esterification of polyhydric alcohols with polybasic acids (or their anhydrides) and unsaturated fatty acids (or glycerol esters thereof), for example derived from linseed oil, tung oil, tall oil as well as from other drying or semi-drying oils. The properties are primarily determined by the nature and the ratios of the alcohols and acids used and by the degree of condensation. The alkyd resin may have any suitable molecular weight, oil length, or unsaturation of its fatty acid chains.

The non-aqueous phase is a liquid phase and may comprise a suitable organic solvent to dissolve the autoxidizable binder, for instance an aromatic solvent such as toluene or xylene, or an aliphatic hydrocarbon solvent such as linear or branched alkanes comprising 6 to 10 carbon atoms. Commercially available solvents such as Shellsol^{(R)} D40, Shellsol^{(R)} D60, Dowanol^{(R)} PMA, and Solvesso^{(R)}-150 may be used.

The autoxidizable resin may be present in the water-in-oil coating composition in any suitable amount, depending on the intended use of the coating. Preferably, the non-aqueous phase comprises in the range of from 20 wt% to 95 wt% autoxidizable resin based on the total weight of the non-aqueous phase, more preferably of from 30 to 90 wt%, even more preferably of from 35 to 70 wt%.

Surfactants may be used to assist emulsification of the water in the non-aqueous phase. Suitable surfactants are known in the art and include conventional anionic, cationic and/or non-ionic surfactants. Preferably, the composition of the invention further comprises one or more surfactants.

The coating composition may comprise one or more additives. Any additives known to be suitable for coating compositions with autoxidizable binders, such as alkyds, may be used. Examples of suitable additives include anti-skinning agents, UV stabilizers, dispersants, surfactants, anti-static agents, flame-retardant agents, lubricants, anti-foaming agents, plasticizers, anti-freezing agents, waxes, and thickeners. The total amount of additives will usually be less than 5 wt%, based on the total weight of the coating composition, preferably less than 3 wt%.

The water-in-oil coating composition may be prepared in any suitable way, typically by emulsifying an aqueous liquid, i.e. water and/or an aqueous solution of the first and/or second salt in water, under high shear conditions, in a non-aqueous liquid that comprises the autoxidizable binder. Suitable emulsification methods are known in the art. A suitable emulsification method is for example disclosed in the materials and methods section of Aurenty et al., Langmuir, 1995 vol. 11, pp 4712-4718. Suitable equipment for emulsifying is known in the art and includes so-called high-speed dispersers (HSD) and in-line mixers.

The coating composition according to the invention may for example be used as an adhesive, a primer, a topcoat, a high-gloss or a matt coating, a wood coating, a wall paint or a flooring paint. The coating composition may suitably be used to coat any suitable substrate, such as for example wood, wood-based substrates (e.g. fibreboard, chipboard), metal, mineral substrates (e.g. stone, plaster, concrete, masonry, cement, gypsum), plastic substrates, fibre-based substrates, ceramic substrates such as glass, asphalt, leather, paper.

The invention also relates to a substrate coated with a coating deposited from a water-in-oil coating composition according to the invention. The water-in-oil coating composition may be applied to the substrate by any suitable method known in the art, such as for example brushing, dipping, spraying, or roller coating.

The present invention is illustrated by means of the following non-limiting examples.

### Examples

### Test methods

### Drying time

Drying times were determined according to ASTM D5895-13 using a BK recorder (wet film thickness 90 µm). After the application of the film on a glass panel (300 x 25 mm), a vertical blunt needle, pressed upon by a 5 g load, was placed into the freshly applied film and then dragged in a straight line through the drying paint in longitudinal direction of the panel. The so-called 'dry-hard time', i.e. when drying has proceeded sufficiently that the paint film is not displaced anymore (Stage III of drying in ASTM D5895-13) was determined for fresh paints (within a day of preparation) and for paints that had been stored at 50 °C for 8 weeks. Drying time was determined at 10 °C and 85 % relative humidity and at 23 °C and 50% relative humidity. The drying at 10 °C was determined by applying the paint at 23 °C. Immediately after application the painted glass strip was moved into a room with a temperature of 10 °C.

### Gloss

Coating compositions were applied on a glass panel (wet film thickness 90 µm) and allowed to dry at 10 °C and 85 % relative humidity or at 23 °C and 50% relative humidity. Gloss of the dried coatings was determined at 20° according to ISO 2813:2014 using a BYK Haze-Gloss Meter.

### Reflection haze

Coating compositions were applied on a glass panel (wet film thickness 90 µm) and allowed to dry at 10 °C and 85 % relative humidity or at 23 °C and 50% relative humidity. Reflection haze of the dried coatings was determined according to ISO13803:2014 using a BYK Haze-Gloss Meter.

### Water-in-oil coating compositions

### Base A (reference) - no salt

A base water-in-oil composition A was prepared comprising 15 weight parts of water emulsified in a non-aqueous phase comprising 47 weight parts of alkyd (Setal 270 SM-70 (Allnex); a commercially available air-drying long oil alkyd resin based on soya bean oil), 24 weight parts of Tioxide TR 92 (titanium dioxide, rutile, Huntsman Pigments), 0.1 weight parts of Nuosperse 657 (a wetting and dispersing agent, Elementis Specialties), 0.2 weight parts of Bentone SD-1 (a Rheological Additive, Elementis Specialties), 0.4 weight parts of Exkin 2 (methyl ethyl ketoxime, Venator), 0.5 weight parts of Nuodex Ca5 (calcium carboxylate, Venator), 1 weight parts of Nuodex Zr18 (zirconium carboxylate, Venator), and 12 weight parts of Exxsol D40 (hydrotreated heavy Naphtha (petroleum)).

### Base B (reference) - sodium acetate trihydrate

A base water-in-oil composition B was prepared that was similar to base composition A, except that 15 weight parts of an aqueous solution of 1.6 wt% aqueous sodium acetate trihydrate were emulsified in the non-aqueous phase instead of water.

### Base C (reference) - magnesium sulphate

A base water-in-oil composition C was prepared that was similar to base composition A, except that 15 weight parts of an aqueous solution of 2.0 wt% magnesium sulphate heptahydrate (MgSO₄.7H₂O) were emulsified in the non-aqueous phase instead of water.

### Base D - magnesium sulphate and sodium acetate trihydrate

A base water-in-oil composition D was prepared that was similar to base composition A, except that 15 weight parts of an aqueous solution of 2.0 wt% magnesium sulphate heptahydrate (MgSO₄.7H₂O) and 1.6 wt% sodium acetate trihydrate were emulsified in the non-aqueous phase instead of water.

**Table 1 Base water-in-oil compositions**

| Base | Salt | |
|---|---|---|
| A | none | reference |
| B | sodium acetate trihydrate | reference |
| C | magnesium sulphate heptahydrate | reference |
| D | magnesium sulphate heptahydrate + sodium acetate trihydrate | invention |

### Preparation of paints with driers

Different finished paints were prepared by addition of a primary drier to the base water-in-oil compositions. The driers used are listed in Table 2.

**Table 2 Driers used in the examples**

| code | description | Commercial name (supplier) | metal wt% |
|---|---|---|---|
| Co | cobalt neodecanoate | Durham Nuodex Cobalt 10 Neo (Venator) | 10 |
| DC | complex of Mn and 1,4,7-trimethyl-1,4,7-triazacyclononane | Nuodex^{®} DryCoat (Venator) | 1 |

### EXAMPLE 1 -drying and coating properties after storage at 50 °C

Paints were prepared by adding 0.35 parts by weight of Durham Nuodex Cobalt 10 Neo to 103 parts by weight of base paints A to D or by adding 1 part by weight of Nuodex^{®} DryCoat to 103 parts by weight of base paints A to D.

Drying time, gloss at 20°, and reflection haze were determined as described above for fresh paint ('initial') and for paint that had been stored for 8 weeks at 50 °C (`8 weeks'). All dried coatings showed high gloss (> 70 gloss units). No significant change in gloss was seen after 8 weeks storage of the paint. Results for drying and haze reflection are given in Tables 3 and 4, respectively.

**Table 3 - Effect of first and second salt on aged drying (after storage at 50 °C)**

| Paint no. | Base | Primary drier | Drying time at 10 °C (hours) | | Drying time at 23 °C (hours) | |
|---|---|---|---|---|---|---|
| | | | initial | 8 weeks | initial | 8 weeks |
| 1 | A | DC | 2.7 | 9.9 | 1.5 | 4.0 |
| 2 | B | DC | 2.9 | 6.5 | 2.1 | 2.1 |
| 3 | C | DC | 3.0 | 8.1 | 3.3 | 2.6 |
| 4 | D | DC | 3.3 | 5.1 | 2.8 | 1.7 |
| 5 | A | Co | 5 | 14.5 | 1.9 | 8.0 |
| 6 | B | Co | 6 | 9.3 | 1.8 | 4.6 |
| 7 | C | Co | 5 | 11.8 | 2.0 | 5.3 |
| 8 | D | Co | 6 | 7.2 | 1.7 | 3.4 |

**Table 4 - Effect of first and second salt on reflection haze (after storage at 50 °C)**

| Paint no. | Base | Primary drier | Reflection haze - drying at 10 °C (haze units) | | Reflection haze - drying at 23 °C (haze units) | |
|---|---|---|---|---|---|---|
| | | | initial | 8 weeks | initial | 8 weeks |
| 1 | A | DC | 181 | 258 | 26 | 131 |
| 2 | B | DC | 60 | 39 | 37 | 174 |
| 3 | C | DC | 14 | 11 | 14 | 19 |
| 4 | D | DC | 12 | 7 | 26 | 31 |
| 5 | A | Co | 6 | 116 | 10 | 7 |
| 6 | B | Co | 9 | 34 | 24 | 12 |
| 7 | C | Co | 4 | 13 | 14 | 5 |
| 8 | D | Co | 7 | 7 | 16 | 5 |

Paints 1 to 3 and 5 to 7 are comparative examples. Paints 4 and 8 are examples according to the invention. The examples show that the addition of sodium acetate trihydrate to the aqueous phase of a water-in-oil alkyd paint reduces the drying time of aged paint. Addition of magnesium sulphate heptahydrate results in a better surface appearance (less haze reflection) of aged paint. The presence of both the inorganic first salt and the organic second salt results in a paint with less retardation of aged drying and improved surface appearance of aged paint.

## Claims

1. A water-in-oil coating composition comprising a water phase emulsified in a non-aqueous liquid phase, wherein the non-aqueous phase comprises an autoxidizable binder and wherein an inorganic first salt and an organic second salt are dissolved in the water phase, wherein the inorganic first salt has a solubility in water of at least 100 grams per liter as determined at 20 °C, and a solubility in the non-aqueous phase of less than 1.0 grams per liter as determined at 20 °C, and wherein the second salt is an organic salt of an alkali or alkaline earth metal, and wherein the coating composition comprises a primary drier.

2. A water-in-oil coating composition according to claim 1, wherein the water phase comprises the inorganic first salt in an amount in the range of from 0.1 to 5.0 wt%, preferably of from 0.2 to 3.0 wt%.

3. A water-in-oil coating composition according to claim 1 or 2, wherein the first salt is a sulphate salt, preferably magnesium sulphate or ammonium sulphate.

4. A water-in-oil coating composition according to any one of the preceding claims, wherein the second salt is an organic salt of lithium, sodium, potassium, cesium, magnesium, calcium, strontium, or barium, preferably an organic salt of lithium, sodium, potassium, cesium, or magnesium, more preferably an organic salt of sodium.

5. A water-in-oil coating composition according to any one of the preceding claims, wherein the second salt is a carboxylate salt.

6. A water-in-oil coating composition according to claim 4 and 5, wherein the second salt is sodium acetate, sodium propionate, or sodium 2-ethyl hexanoate.

7. A water-in-oil coating composition according to claim 3 and 6, wherein the first salt is magnesium sulphate or ammonium sulphate and the second salt is sodium acetate, sodium propionate, or sodium 2-ethyl hexanoate.

8. A water-in-oil coating composition according to any one of the preceding claims, wherein the second salt has a solubility in the water phase of at least 100 grams per litre and wherein the solubility of the second salt in the water phase is at least 10 times higher than the solubility of the second salt in the non-aqueous phase.

9. A water-in-oil coating composition according to any one of the preceding claims comprising in the range of from 0.1 to 10 wt% of the second salt, based on the weight of the water phase, preferably of from 1 to 5 wt%.

10. A water-in-oil coating composition according to any one of the preceding claims comprising in the range of from 1.0 wt% to 49 wt% water, preferably of from 5.0 to 25 wt%, based on the weight of the total coating composition.

11. A water-in-oil coating composition according to any one of the preceding claims, wherein the autoxidizable binder is an alkyd resin.

12. A substrate coated with a coating deposited from a water-in-oil coating composition according to any one of the preceding claims.

## Patentansprüche

1. Wasser-in-ÖI-Beschichtungszusammensetzung, umfassend eine in einer nichtwässrigen flüssigen Phase dispergierte Wasserphase, wobei die nichtwässrige Phase ein autoxidierbares Bindemittel umfasst und wobei ein anorganisches erstes Salz und ein organisches zweites Salz in der Wasserphase gelöst sind, wobei das anorganische erste Salz eine Löslichkeit in Wasser von mindestens 100 Gramm pro Liter gemäß Bestimmung bei 20 °C und eine Löslichkeit in der nichtwässrigen Phase von weniger als 1,0 Gramm pro Liter gemäß Bestimmung bei 20 °C aufweist und wobei es sich bei dem zweiten Salz um ein organisches Salz eines Alkali- oder Erdalkalimetalls handelt, und wobei die Beschichtungszusammensetzung einen primären Trockenstoff umfasst.

2. Wasser-in-Öi-Beschichtungszusammensetzung nach Anspruch 1, wobei die Wasserphase das anorganische erste Salz in einer Menge im Bereich von 0,1 bis 5,0 Gew.-%, vorzugsweise von 0,2 bis 3,0 Gew.-%, umfasst.

3. Wasser-in-ÖI-Beschichtungszusammensetzung nach Anspruch 1 oder 2, wobei es sich bei dem ersten Salz um ein Sulfatsalz, vorzugsweise Magnesiumsulfat oder Ammoniumsulfat, handelt.

4. Wasser-in-ÖI-Beschichtungszusammensetzung nach einem der vorhergehenden Ansprüche, wobei es sich bei dem zweiten Salz um ein organisches Salz von Lithium, Natrium, Kalium, Caesium, Magnesium, Calcium, Strontium oder Barium, vorzugsweise ein organisches Salz von Lithium, Natrium, Kalium, Caesium oder Magnesium, weiter bevorzugt ein organisches Salz von Natrium, handelt.

5. Wasser-in-ÖI-Beschichtungszusammensetzung nach einem der vorhergehenden Ansprüche, wobei es sich bei dem zweiten Salz um ein Carboxylatsalz handelt.

6. Wasser-in-ÖI-Beschichtungszusammensetzung nach Anspruch 4 und 5, wobei es sich bei dem zweiten Salz um Natriumacetat, Natriumpropionat oder Natrium-2-ethylhexanoat handelt.

7. Wasser-in-ÖI-Beschichtungszusammensetzung nach Anspruch 3 und 6, wobei es sich bei dem ersten Salz um Magnesiumsulfat oder Ammoniumsulfat handelt und es sich bei dem zweiten Salz um Natriumacetat, Natriumpropionat oder Natrium-2-ethylhexanoat handelt.

8. Wasser-in-ÖI-Beschichtungszusammensetzung nach einem der vorhergehenden Ansprüche, wobei das zweite Salz eine Löslichkeit in der Wasserphase von mindestens 100 Gramm pro Liter aufweist und wobei die Löslichkeit des zweiten Salzes in der Wasserphase mindestens 10-mal höher ist als die Löslichkeit des zweiten Salzes in der nichtwässrigen Phase.

9. Wasser-in-ÖI-Beschichtungszusammensetzung nach einem der vorhergehenden Ansprüche, umfassend im Bereich von 0,1 bis 10 Gew.-% des zweiten Salzes, bezogen auf das Gewicht der Wasserphase, vorzugsweise 1 bis 5 Gew.-%.

10. Wasser-in-ÖI-Beschichtungszusammensetzung nach einem der vorhergehenden Ansprüche, umfassend im Bereich von 1,0 Gew.-% bis 49 Gew.-% Wasser, vorzugsweise von 5,0 bis 25 Gew.-%, bezogen auf das Gewicht der gesamten Beschichtungszusammensetzung.

11. Wasser-in-ÖI-Beschichtungszusammensetzung nach einem der vorhergehenden Ansprüche, wobei es sich bei dem autoxidierbaren Bindemittel um ein Alkydharz handelt.

12. Substrat, das mit einer aus einer Wasser-in-Öl-Beschichtungszusammensetzung nach einem der vorhergehenden Ansprüche abgeschiedenen Beschichtung beschichtet ist.

## Revendications

1. Composition de revêtement eau-dans-huile comprenant une phase aqueuse émulsifiée dans une phase liquide non aqueuse, la phase non aqueuse comprenant un liant autooxydable et un premier sel inorganique et un deuxième sel organique étant dissous dans la phase aqueuse, le premier sel inorganique ayant une solubilité dans l'eau d'au moins 100 grammes par litre comme déterminée à 20 °C, et une solubilité dans la phase non aqueuse inférieure à 1,0 gramme par litre comme déterminée à 20 °C, et le deuxième sel étant un sel organique d'un métal alcalin ou alcalino-terreux, et la composition de revêtement comprenant un siccatif primaire.

2. Composition de revêtement eau-dans-huile selon la revendication 1, la phase aqueuse comprenant le premier sel inorganique en une quantité dans la plage allant de 0,1 à 5,0 % en poids, préférablement allant de 0,2 à 3,0 % en poids.

3. Composition de revêtement eau-dans-huile selon la revendication 1 ou 2, le premier sel étant un sel de sulfate, préférablement le sulfate de magnésium ou le sulfate d'ammonium.

4. Composition de revêtement eau-dans-huile selon l'une quelconque des revendications précédentes, le deuxième sel étant un sel organique de lithium, de sodium, de potassium, de césium, de magnésium, de calcium, de strontium ou de baryum, préférablement un sel organique de lithium, de sodium, de potassium, de césium ou de magnésium, plus préférablement un sel organique de sodium.

5. Composition de revêtement eau-dans-huile selon l'une quelconque des revendications précédentes, le deuxième sel étant un sel de carboxylate.

6. Composition de revêtement eau-dans-huile selon les revendications 4 et 5, le deuxième sel étant l'acétate de sodium, le propionate de sodium ou le 2-éthylhexanoate de sodium.

7. Composition de revêtement eau-dans-huile selon les revendications 3 et 6, le premier sel étant le sulfate de magnésium ou le sulfate d'ammonium et le deuxième sel étant l'acétate de sodium, le propionate de sodium ou le 2-éthylhexanoate de sodium.

8. Composition de revêtement eau-dans-huile selon l'une quelconque des revendications précédentes, le deuxième sel ayant une solubilité dans la phase aqueuse d'au moins 100 grammes par litre et la solubilité du deuxième sel dans la phase aqueuse étant au moins 10 fois plus élevée que la solubilité du deuxième sel dans la phase non aqueuse.

9. Composition de revêtement eau-dans-huile selon l'une quelconque des revendications précédentes comprenant dans la plage allant de 0,1 à 10 % en poids du deuxième sel, sur la base du poids de la phase aqueuse, préférablement allant de 1 à 5 % en poids.

10. Composition de revêtement eau-dans-huile selon l'une quelconque des revendications précédentes comprenant dans la plage allant de 1,0 % en poids à 49 % en poids d'eau, préférablement allant de 5,0 à 25 % en poids, sur la base du poids de la composition de revêtement totale.

11. Composition de revêtement eau-dans-huile selon l'une quelconque des revendications précédentes, le liant autooxydable étant une résine d'alkyde.

12. Substrat revêtu par un revêtement déposé à partir d'une composition de revêtement eau-dans-huile selon l'une quelconque des revendications précédentes.
